**Europäisches Patentamt**

**European Patent Office**

**Office européen des brevets**

(19)

(11) **EP 0 936 362 A2**

(12) **EUROPEAN PATENT APPLICATION**

(43) Date of publication:
18.08.1999 Bulletin 1999/33

(51) Int. Cl.$^6$: **F16B 19/10**

(21) Application number: 99100808.7

(22) Date of filing: 18.01.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 16.02.1998 IT PN980013

(71) Applicant: **PLASTAL - ZCP S.p.A.**
**33170 Pordenone (IT)**

(72) Inventor: **Scalon, Danilo**
**30027 S. Donà di Piave, Venezia (IT)**

(74) Representative:
**Agostini, Agostino et al**
**PROPRIA,**
**Protezione Proprietà Industriale srl,**
**Via Mazzini 13**
**33170 Pordenone (IT)**

(54) **Improved rivet and method for the utilization thereof**

(57) Rivet made of metal, rubber or plastics, whose axially hollow cylindrical shank (1) comprises a minimum-thickness portion (8) capable of being deformed by male threaded means (50, 60) being screwed into a corresponding portion of the cavity, and a portion (6) which is comprised between the head (2) and said deformable portion (8) and has a length ($L_A$) that is greater than the local thickness ($T_2$) of at least one (20) of the parts (10, 20) to be joined together. The invention also covers the method for the utilization of the rivet.

USE: Manufacturing of end products made up of parts made of materials undergoing different extents of thermal expansion when operating in ambients at elevated temperatures.
ADVANTAGES: The play that remains between at least some of the parts to be assembled, thanks to them being joined together by means of the rivet, allows for a greater utilization flexibility and/or different processing or machining tolerances for the single parts.

FIG. 4

EP 0 936 362 A2

**Description**

The present invention refers to an improved type of rivet and the related method for the utilization thereof in view of joining together two or more parts, which are at least partially overlapping, so as to assemble them into a more complex product.

In this connection, a method that is largely used in industry in general, owing to its effectiveness combined with the relatively low costs and the reduced energy usage it implies, is the process that is generally known as riveting in the art, ie. a process that only requires the provision of coaxial holes in the parts to be joined, in correspondence of the joining points thereof, for the insertion of the rivets.

In certain applications, it would prove particularly valuable to be able to rely on a riveting method that allows for a certain play to exist between the parts to be joined, generally in the direction of the axis of the rivet, but also, in certain circumstances, on a plane that is perpendicular to said axis. A typical case in which such a need arises is when the parts to be joined are made of materials that feature a different mechanical strength and/or are subject to a different thermal expansion in the environment in which they are used and operate, such as for instance metal and glass or plastics. Similar needs also arise when the holes provided for the insertion of the rivets have different machining tolerances in the parts to be joined.

To the best of the Applicant's knowledge, no method seems actually to exist which is suitable to effectively meet needs of such a kind. However, in consideration of a certain apparent resemblance to the present invention, mention is made here of the documents EA-A-0 342 406 and EP-A-0 494 747, both of which disclose rivets having a flat head and a shank that is axially drilled throughout its length. The radial expansion of the shank of the rivet, along with the resulting shortening thereof so as to enable the parts to be joined to come into tight contact with each other under the head of the rivet, takes place when a threaded spigot is inserted into the drilled shank of the rivet and is screwed on to the threaded portion thereof that is provided near the free end of the shank. Therefore, not even the use of the rivets disclosed in the afore cited documents is such as to enable a play to be obtained between the mutually joined parts as it would on the contrary prove useful to have in all those particular circumstances as cited above.

It therefore is a main purpose of the present invention to provide a method for the utilization of a rivet of an improved type which, without incurring any loss of any of the afore cited economic and quality advantages, enables a certain play to exist between the two or more mutually joined parts, both along the axis of the rivet and perpendicularly to the same axis.

According to the present invention, these aims are reached in a rivet and a method for the utilization thereof having the features and characteristics as recited in the appended claims.

Characteristics and advantages of the present invention will anyway be more readily understood from the description that is given below by way of non-limiting example with reference to the accompanying drawings, in which

- Figure 1 is a flow-chart showing schematically the sequences of the phases of a preferred, although not exclusive, method for the utilization of the rivet according to the invention in view of mutually joining two parts so as to make it possible for a certain play to remain between said mutually joined parts in the so assembled product;

- Figure 2, which is a view of only one of said mutually joined parts and the rived sectioned along its own axis, refers to an initial phase of the above cited method;

- Figure 3 is fully similar to Figure 1, but refers to an intermediate phase of the above mentioned method;

- Figure 4 refers to the final phase of the same method as cited above and shows the two parts joined to each other so as to form an assembled end-product.

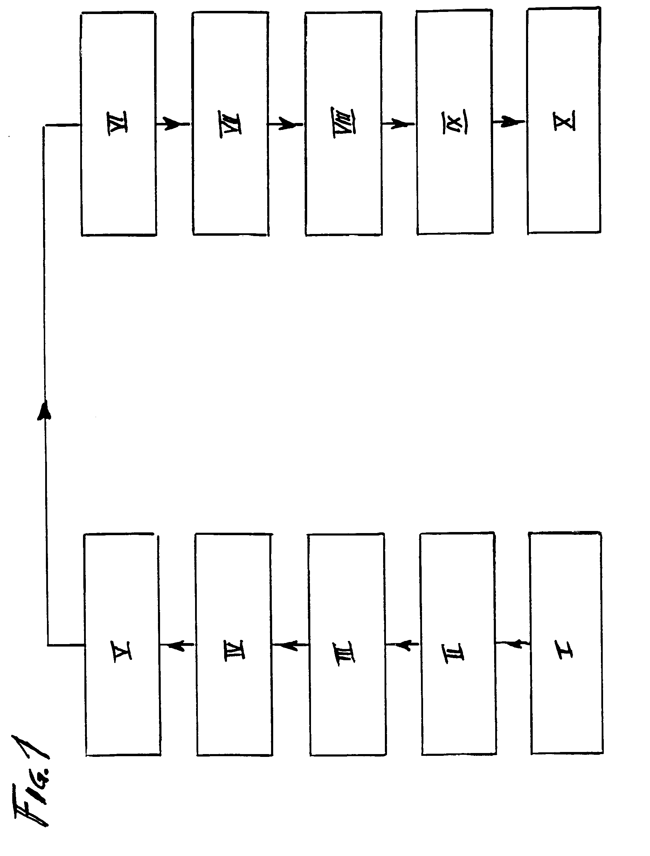

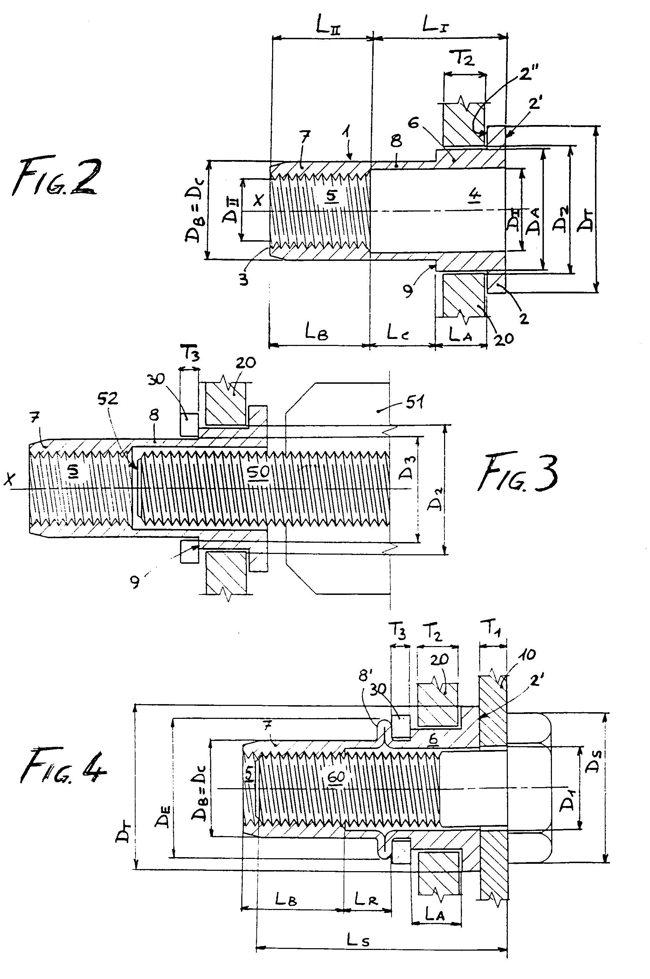

The characteristic features of the construction of the rivet according to the present invention can be inferred from the illustration in Figure 2, where the rivet is shown in its clamping position, but before being deformed. The rivet (that in this example is shown to be made of metal, but maintains the same design even when it is made of rubber or plastics) consists of a shank 1, a flat head 2 that may be circular or have any other appropriate shape, and a free end 3.

The interior of the rivet, ie. the cylindric cavity that extends along its axis X, is of a fully conventional design and consists substantially of

- a first portion 4 having a larger diameter $D_I$ that extendsalong the axis X of the rivet for a length $L_I$ starting from the distal surface 2' of the head 2;

- a second portion 5 that strats at the end of said first portion 4 and extends up to the free end 3 of the shank 1; it is threaded and has a diameter $D_{II}<D_I$ and a length $L_{II}<L_I$.

According to a feature of the present invention, the shank 1 consists of three portions, ie:

- a first portion 6, that extends along the axis X for a length $L_A$, equal to a part of the afore cited length $L_I$ of said first portion 4 of the axial cavity of the rivet;

in the example illustrated in the accompanying drawing, this first portion 6 is cylindrical, with an outside diameter $D_A$, but may also be prismatic;

- a second portion 7, having a cylindrical shape with an outside diameter $A_B < D_A$, that extends along the axis X for a length $L_B = L_{II}$, ie. equal to the length of said second portion 5 of the axial cavity of the rivet;

- a third portion 8, which is also cylindrical in its shape, is situated between said first and second portions 6 and 7, and has an outside diameter $D_C = D_B$ and a length $L_C$ that is equal to the remaining part of the length $L_I$, wherein said third portion 8 is the portion having the thinniest thickness of the whole shank 1 of the rivet.

The separation between the first portion 6 and the other two portions 7, 8 (ie. between the diameters $D_A$ and $D_B = D_C$) consists of a step-like configuration 9 that is perpendicular to the axis X of the rivet, ie. parallel to the distal surface 2' and the proximal surface 2" of the head 2.
A preferred (although not exclusive) method for the utilization of the above illustrated rivet, which in particular proves to be of great value when the rivet is of metal, can be used to join a first part 10, made of sheet-metal material (and having locally a thickness $T_1$), to a second part 20 made of plastics (and having locally a thickness $T_2$) - see Figure 4.
An interesting application of the rivet according to the present invention can for instance be found in the motor-car industry, where it is for example used to fasten a radiator cowling (made of plastic material) to the front part of the body (made of sheet-metal material) of the motor vehicle. In this case, the end product may find itself operating under simultaneous exposure to a high temperature of the surrounding ambient and the waste heat radiating from the radiator and/or the engine itself.
The first phase of the method according to the invention - which is indicated with the block I in the flow chart appearing in Figure 1 - calls for the parts 10 and 20 to undergo drilling so as to obtain holes with a diameter of $D_1 = D_I$ and $D_2 > D_A$, respectively, said drilling diameters being also $D_1 < D_T$ and $D_2 < D_T$, respectively, where $D_T$ is the diameter of the head 2 of the rivet.
The rivet to be used must obviously be selected so as to ensure that $L_A > T_2$, if the plastic material (eg. ABS) used to make the second part 20 has to be ensured the possibility of undergoing a greater thermal expansion than the metal (eg. steel) of the first part 10.
Following the flow-hart represented in Figure 1, and duly referring to the Figures 2, 3 and 4 where this appears to be appropriate, the subsequent phases of the method according to the present invention are:

- Insertion of the shank 1 of the rivet in the hole with a diameter $D_2 > D_A$ of the second part 20, so that the latter finds itself in correspondence of the first portion 6 of the shank 1 - see both block II of Figure 1 and Figure 2.

- Insertion in the shank 1, starting from the free end 3 thereof, of an auxiliary part 30 having a hole of a nominal diameter ($D_3$ being larger than $D_B$ and smaller than $D_A$, ie $D_3 > D_B$ and $D_3 < D_A$) and a thickness $T_3 < L_C$ - see block III of Figure 1. The material of which said auxiliary part 30 is made is preferably a metal, but it may also be rubber or plastics in the case in which a particular absence of vibrations and/or noise is required in the end product being manufactured by joining said parts 10 and 20 to each other.

- Insertion in the axial cavity of the rivet of a spigot 50 - see both block IV of Figure 1 and Figure 3. The spigot 50 is threaded in a similar manner as the second portion 5 of the same cavity of the rivet and terminates, on the opposite side with respect to its tip 52, with a flange 51 enabling it to be held, ie. clamped on a riveting machine of any per sè known, largely used type (not shown).

- Screwing of said spigot 50 into said second portion 5 of the axial cavity of the rivet - see block V of Figure 1 - so as to bring about a shortening along the axis X and, at the same time, a radial expansion, indicated at 8' in Figure 4, of said thinniest, and therefore more easily deformable portion 8 of the shank 1 of the rivet. In other words, in this phase of the method said third portion 8 of the shank 1 of the rivet changes from an initial length $L_3$ to a length $L_R < L_C$, and from an initial diameter $D_C = D_B$ to a diameter $D_E > D_C$.

- Said screwing operation of the spigot 50 into the rivet is ended when the flange 51 abuts against the distal surface 2' of the head 2 of the rivet - see block VI of Figure 1. As a result, the radial expansion 8' of the shank 1 of the rivet causes said auxiliary part 30 to be pushed against the step-like configuration 9 that separates said first portion 6 from the other two portions 7 and 8 and retains the second part 20 between the same auxiliary part 30 and the head 2 of the rivet owing to the latter having been selected so as $L_A > T_2$, as already stated above.

- Removal of the spigot 50 from the rivet - see block VII of Figure 1.

- Positioning of the part 10, which has locally a thickness $T_1$, against the distal surface 2' of the head 2 so that its hole having a diameter $D_1$ comes to lie over the first portion 4 having a diameter $D_I$ of the axial cavity of the rivet, $D_1$ being equal to $D_I$, ie.

$D_1 = D_I$, as this has already been stated above - see block VIII of Figure 1.

- Insertion of a screw 60, having a stem of a length $L_S$ with the same threading as the one provided in said second portion 5 of the axial cavity of the rivet, as well as a hexagonal head 61 of a diameter $D_S$, in said hole drilled in the part 10 - see block IX of Figure 1.

- Tightening down of said screw 60 in said second portion 5 until said same part 10 is fully clamped by the head 61 - see block X of Figure 1.

At this point the assembly of the parts 10 and 20 is complete.

In accordance with the desired result, the two parts 10 and 20 are actually joined to each other. However, while the first part 10 is fully clamped between the head 61 of the screw 60 and the head 2 of the rivet, the second part 20 keeps a certain play with respect to the part 10 owing to the fact that its local thickness $T_2$ is smaller than the width $L_A$ of the portion of shank 1 of the rivet in which it is located, ie. the first portion 6. Furthermore, as this has already been mentioned earlier in this description, such a slight play can prove very valuable, not only in view of allowing for the greater extent of thermal expansion of the second part 20 as compared with the first part 10 during the working life of the assembly in a high-temeprature ambient, but also in view of enabling the hole in the same second part 20 to be drilled to an elongated shape, instead of a circular one.

Another preferred method for the utilization of the rivet according to the present invention proves of particular value in those cases in which the rivet is made of rubber, ie. an elastic material, but may also be used when the rivet is made of metal or plastics. The phases included in this second method for the utilization of the rivet (which for reasons of greater simplicity is described using the same reference numerals as the ones used in Figures 2, 3 and 4) are:

- Drilling of the first and the second part 10 and 20 to be joined to each other, having a thickness $T_1 < L_C$ and $T_2 < L_A$, respectively, in order to make holes with a diameter $D_1 > D_B = D_C$ and $D_2 > D_A$, respectively.

- Laying the parts 10 and 20 over each other under alignment of said respective holes of theirs.

- Insertion of the shank 1 of the rivet in the same holes in such a manner that the parts 10 and 20 find themselves located in correspondence of the third portion 8 (ie. the portion with the thinniest thickness) and the first portion 6 of the shank of the rivet.

- Insertion of the screw 60 in the axial cavity of the rivet and subsequent tightening thereof down in the second portion 5, up to the point at which it brings about a shortening along the axis X and, at the same time, the radial expansion of said third portion 8 of the shank 1 until the diameter $D_E > D_C$, so as to push the proximal surface of the part 10 against the step-like configuration 9.

At the end of the above described sequence of phases, the screw 60 is either left in the rivet (if the latter is made of an elastic material such as rubber, for instance in view of reducing the noise and/or the vibrations transmitted between the parts that have so been joined to each other) or removed therefrom (if the rivet is made of a material, like brass or steel, that undergoes permanent deformation.

In both cases, the two parts 10 and 20 are fastened to each other, but, while the part 10 is clamped firmly, the other part 20 is left with a slight play along the axis X and/or perpendicularly to said axis.

It will be appreciated that, although the above description and illustrations refer to a preferred embodiment and two related utilization methods, a number of modifications and variants can be introduced and/or proposed by those skilled in the art for mutually joining two or more parts, without departing from the scope of the present invention.

**Claims**

1. Rivet comprising a head (2), a shank (1) and an inner cavity extending throughout its length along its axis (X), wherein said cavity is formed by a first portion (4) having a larger diameter $(D_I)$, and extending starting from the distal surface (2') of the head (2), and a threaded second portion (5) having a smaller diameter $(D_{II})$ and extending starting immediately from the end of said first portion (4) up to the free end (3) of the shank (1), **characterized in that**, starting from the proximal surface (2") of the head (2), said shank (1) substantially consists of three portions, ie.:

   - a first portion (6) having a larger overall cross-section width $(D_A)$ and extending along the axis (X) for a length $(L_A)$ that is equal to a part of the length $(L_I)$ of said first portion (4) of said cavity and greater than the thickness $(T_2)$ of at least one (20) of the parts to be joined with at least another part (10);

   - a second portion (7) having a cylindrical shape, an outside diameter $(D_B)$ that is smaller than said overall width of said first portion (6), and extending for a length $(L_B)$ that is substantially equal to the whole length $(L_{II})$ of said second portion (5) of said cavity;

   - a third portion (8), which is also cylindrical in its shape, is situated between said first and said second portions (6, 7), has an outside diameter ($D_C$) that is equal to the diameter ($D_B$) of said second portion (7), and extends for a length ($L_C$) that is equal to the remaining part of said length ($L_I$) of said first portion (4) of said cavity, so that said third portion (8) is the portion of the shank (1) with the thinniest thickness.

2. Rivet according to claim 1, **characterized in that** said first portion (6) of the shank (1) of the rivet is cylindrical in its shape.

3. Rivet according to claim 1 or 2, **characterized in that** said first portion (6) of the shank (1) is separated from the other portions (7, 8) thereof by a step-like configuration (9) that is perpendicular to the axis (X).

4. Method for the utilization of a rivet according to any of the preceding claims for mutually joining two or more at least partially overlapping, preliminarily drilled parts (10, 20), that comprises a phase in which the shank (1) is deformed by male threaded means (50, 60) being screwed into said second portion (5) of said axial cavity of the shank (1), **characterized in that** said deformation only involves said third portion (8) of the shank (1), ie. the portion thereof having the thinniest thickness.

5. Method for the utilization of a rivet according to claim 4, characterized in that an auxiliary part (30) is inserted around the shank (1) of the rivet so as to remain clamped between said permanent deformation (8') of said third portion (8) of the shank (1) and the step-like configuration (9) that separates said first portion (6) from the other two portions (7, 8) of the shank (1).

FIG.1

| | | | | |
|---|---|---|---|---|
| VI | VII | VIII | IX | X |

| | | | | |
|---|---|---|---|---|
| V | IV | III | II | I |

FIG.2

FIG.3

FIG.4